# EUROPEAN PATENT APPLICATION

(11) **EP 4 831 896 A1**
(43) Date of publication of application: **28.10.2026**
(21) Application number: 26154169.2
(22) Date of filing: 26.01.2026
(51) Int. Cl.: G06Q 30/0201, G06Q 10/087, G06Q 30/0202

(54) **CUSTOMIZED GENERATING SYSTEMS AND METHODS FOR BRICK-AND-MORTAR STORES**

(30) Priority: 23.04.2025 WO PCT/US2025/025915
(71) Applicant: Genfied S.r.l., 20020 Milano (IT)
(72) Inventor: MOSHKOVITZ, Gidon, 20045 Lainate (IT); AYUB, Firas, 1750311 Nof HaGalil (IL); JUBRAN, Ibrahim, 3566418 Haifa (IL); DEL COL BALLETTO, Luca, 20045 Lainate (IL)
(74) Representative: ip21 Ltd

(57) **Abstract**

The disclosure relates to systems and methods for generating customized a set of operational parameters based on sensor input in brick-and-mortar (BnM) stores. More specifically, the disclosure relates to the use of a plurality of sensors' input to generate a customized set of executable recommendations used for optimizing operational parameters of a BnM space, such as retail and/or service.

## Description

### BACKGROUND

The present disclosure is directed to systems and methods for generating customized code based on sensor input in brick-and-mortar (BnM) stores. More specifically, the disclosure is directed to the use of sensors' input to generate a customized set of executable instructions used for optimizing operations of a BnM stores.

Current retail technology landscape is characterized by sophisticated integrated systems encompassing point-of-sale (POS), enterprise resource planning (ERP), and security monitoring solutions. Some POS systems have evolved beyond simple transaction processing to become comprehensive business intelligence platforms. Modern implementations are predominantly cloud-based, offering flexibility, real-time data access, and automatic updates compared to traditional on-premise solutions. AI-powered analytics can further represent a significant advancement in retail technology. These systems track real-time sales and inventory, generate instant reports, predict customer buying behavior, optimize stock levels, and detect fraudulent transactions. Machine learning modules integrated with POS solutions can accumulate available data and provide automated precise reporting. AI-driven video analytics can additionally transformed security monitoring from passive review to active prevention, with capabilities to detect theft, suspicious behavior, and patterns indicating future risks.

Despite these advancements, retail technology systems present several challenges. Data integration remains problematic as retailers collect massive amounts of information from various sources including online transactions, in-store purchases, customer service interactions, and supply chains. The disjointed nature of this data can lead to inconsistent customer experiences and missed opportunities for personalization and demand forecasting. Security concerns persist as a significant issue. Older POS systems are particularly vulnerable to security breaches and cybersecurity attacks, as vendors focus on supporting the latest versions of their systems.

Implementation challenges include complexity in bringing inventory, sales, supply chain, and finance systems under one ERP umbrella, especially when synchronizing real-time data across multiple locations and channels. Similarly, data migration presents significant hurdles, as retailers often deal with years of accumulated customer information, sales data, and inventory records that must be transferred without errors. Then there is user training, which represents another challenge, as employees may feel overwhelmed by new tools and processes, potentially resisting change. Additionally, while many sites deploy multiple RGB monocular cameras, the data captured is typically processed independently per camera, without spatial or temporal fusion between multiple streams, no global 3D map is formed.

Cost considerations remain another significant drawback for retailers. For example, POS systems require substantial initial investment in hardware, software, and training, creating potential hardship for businesses with limited budgets. Additionally, frequent software updates may necessitate additional staff training and can create compatibility issues with existing hardware or third-party connections, potentially disrupting business operations.

Integration between POS and ERP systems presents ongoing challenges. Historically developed by different vendors, these systems often operate separately, requiring scheduled data transfers to share information. For businesses operating chain POS systems, real-time data integration is crucial for inventory inquiries, transfers between stores, customer loyalty program management, and point inquiries. Inventory management capabilities vary significantly between systems. Balancing inventory levels across locations to meet demand without overstocking has become increasingly difficult with fluctuating consumer demand and supply chain volatility. While advanced analytics and machine learning offer potential solutions, implementation remains challenging for many retailers, especially small ones.

These and other aspects are addressed by the following systems and methods.

### SUMMARY

Disclosed, in various exemplary implementations, are systems and methods for generating customized code based on sensor input in brick-and-mortar (BnM) stores. More specifically, Disclosed, is the use of sensors' input to generate a customized set of executable instructions used for optimizing operations of a BnM stores. In an exemplary implementation, provided herein is a networked system, implemented in a commercial brick-and-mortar space comprising: a communication module; at least one imaging module in electronic communication with the communication module, wherein the imaging module is operable to image at least a portion of the commercial brick-and-mortar space; a user interface; a central processing module (CPM), in communication with the at least one imaging module, the user interface, and the communication module, wherein the CPM further comprises at least one processor in communication with a non-transitory memory device storing thereon a processor-readable media with a set of executable instructions, configured when executed by at least one processor to: receive at least one image, or a stream of a plurality of images from the imaging module representing at least the portion of the commercial brick-and-mortar space; from the at least one image, or the stream of a plurality of images, extract a plurality of parameters; and based on the extracted parameters, generate a customized a set of recommendations configured to optimize a plurality of operational parameters of the commercial brick-and-mortar space.

In another exemplary implementation, provided herein is a computer-implemented method for optimizing a brick-and-mortar space operations through sensor-driven artificial intelligence, the method comprising: capturing, via at least one imaging module positioned in the brick-and-mortar space, a sequence of digital images depicting customer interactions with physical products and store fixtures; processing said digital images through a GPU-accelerated tensor processor to detect spatial-temporal patterns of customer movement and product engagement; receiving a proximity signal from a mobile device within the BnM space, said signal encoding real-time customer location data; extracting, via a trained convolutional neural network, quantified operational parameters from fused image and proximity data streams, said parameters including dwell time gradients, path collision frequencies, and inventory touch rates; generating executable control instructions configured to dynamically adjust at least two interdependent store physical systems; transmitting said control instructions through an interface to effect real-time physical environment modifications; and iteratively refining said neural network through federated learning updates derived from anonymized customer interaction patterns across multiple retail locations.

In yet another exemplary implementation, provided herein is an article of manufacture comprising a non-transitory computer-readable storage medium having a set of executable instructions embedded thereon, which when executed by at least one processor, cause the at least one processor to: receive at least one image, or a stream of a plurality of images from an imaging module representing at least a portion of a commercial brick-and-mortar space; from the at least one image, or the stream of a plurality of images, extract a plurality of parameters; and based on the extracted parameters, generate a customized code operable to provide a user with a set of recommendations configured to optimize a plurality of operational parameters of the commercial brick-and-mortar space.

These and other features of the networked systems, methods implemented using the disclosed systems, and articles of manufacture comprising computer-readable media enabling the methods disclosed for generating a customized set of executable instructions used for optimizing operations of a BnM stores, will become apparent from the following detailed description when read in conjunction with the drawings, which are exemplary, not limiting.

### BRIEF DESCRIPTION OF THE FIGURES

For a better understanding of the systems, methods, for generating a customized set of executable instructions used for optimizing operations of a BnM stores, with regard to the exemplary implementations thereof, reference is made to the accompanying drawings, in which:
FIG. 1, is a schematic depicting output of the system illustrating an image captured by the system used for generating the customized set of executable instructions;
FIG. 2 is a schematic depicting output of the system illustrating foot traffic analyzed by the system, which is used for generating the customized set of executable instructions;
FIG. 3, is a schematic depicting output of the system illustrating a heat map generated by the system, showing residence time densities at different locations in the BnM space.
FIG. 4, is a schematic illustrating the interrelationship between certain system components;
FIG.s 5 and 6, illustrate flow charts of an exemplary implementation of the methods of generating a customized set of executable instructions used for optimizing operations of a BnM stores.

### DESCRIPTION

Provided herein are exemplary implementations, are systems and methods for generating customized code based on sensor input in brick-and-mortar (BnM) stores. More specifically, provided herein is the use of sensors' input, such as imaging modules to generate a customized set of executable instructions used for optimizing operations of a BnM stores.

In certain exemplary implementations, the networked systems disclosed operate within physical commercial establishments such as, for example, retail stores or service centers, employing distributed sensor arrays and centralized processing to transform environmental and other inputs into actionable, optimized business insights. This architecture bridges physical infrastructure with cloud-based analytics through coordinated data pipelines, enabling dynamic and real-time optimization of enterprise operations.

A multi-protocol gateway can be used to manage bidirectional data flows between system components, supporting, for example, IEEE 802.11 standards for high-bandwidth image transmission and/or Bluetooth Low Energy (BLE) and or near-field communication (NFC) for proximity detection. This module can implement for example, quality-of service (QoS) prioritization to ensure real-time transmission of video streams 9 or frames), while maintaining secondary sensor data channels, with encrypted WebSocket connections for maintaining persistent communication between edge devices and cloud infrastructure, or the application server if the system is local to the BnM space.

In certain exemplary implementations, strategically positioned RGB-D cameras with overlapping fields of view capture (stereoscopic) imagery at 15-60 FPS, that could optionally be synchronized with infrared depth sensors to generate 3D spatial maps. The imaging module can incorporate PTZ (pan-tilt-zoom) mechanisms for adaptive coverage adjustment, coupled with onboard preprocessing ASICs that perform initial frame normalization and motion detection before transmission.

In yet other exemplary implementations, multiple monocular RGB cameras with overlapping fields of view are used. A 3D spatial understanding is generated by fusing the independent (2D) video streams. Accordingly, and to achieve temporospatial 3D image fusion from multiple RGB monocular cameras, a precise spatial calibration and temporal synchronization of the camera array is carried out. Each camera is geometrically calibrated to establish intrinsic parameters (e.g., focal length, optical center, distortion coefficients and the like) and extrinsic parameters (e.g., relative positions and orientations), relative to a coordinate system shared among the cameras (in other words, the covered floor space). This calibration is configured to ensure geometric consistency across views, enabling accurate triangulation of 3D points captured by each camera.

Temporal synchronization can be achieved for example, through hardware triggers or software-based network time protocols (e.g., PTP), configured to ensure that all cameras capture frames simultaneously. Minor timing mismatches (e.g., >1 ms) may introduce motion artifacts in dynamic scenes, such that misaligned frames create inconsistencies in 3D point cloud registration for fast-moving objects - an anomaly that can affect conclusions and is addressed by the synchronization. The fusion pipeline can be configured to employ multi-view stereo algorithms that combine, for example, epipolar geometry with temporal coherence constraints. Furthermore, for each synchronized frame set, feature detectors (e.g., SIFT, ORB, or deep learning-based descriptors) can be used to extract correspondences across views, which are filtered using, for example random sample consensus (RANSAC) (or MLESAC (Maximum Likelihood Estimation SAmple Consensus), LO-RANSAC (Locally Optimized RANSAC), USAC (Universal Sample Consensus), and the like), to remove outliers followed optionally, with matching and refinement techniques, using for example, Descriptor Matching with Ratio Test (e.g., SIFT + Lowe's ratio test), and/or Cycle Consistency (in Multi-View Matching, ensuring feature tracks across multiple views remain consistent (e.g., point A in view 1 ↔ point B in view 2 ↔ point A in view 1). These captured and extracted 2D correspondences are triangulated into 3D points using for example, camera projection matrices derived from calibration data.

Temporal considerations require tracking these extracted features across consecutive frames using optical flow and/or Kalman filters, with motion priors enforcing physical plausibility of object (or people) trajectories. In certain implementations. higher spatial resolution (e.g., 4K vs 480p) improves feature matching accuracy but increases computational latency, while higher frame rates (60 fps vs 22 fps) enhance motion tracking fidelity at the cost of higher data throughput. Dense reconstruction leverages depth estimation techniques like plane sweeping or cost volume filtering, where pixel-wise disparity maps are computed across camera clusters. Temporal fusion of these depth maps may incorporate recursive Bayesian filtering to maintain stability across frames, weighting new measurements against prior estimates based on confidence metrics. While higher-resolution images reduce depth estimation errors (particularly for objects distant from the camera), but require more aggressive downsampling (referring to resolution reduction through pixel sampling techniques) for real-time processing.

For dynamic scenes, non-rigid registration techniques can be used to align successive point clouds while preserving topological consistency, using iterative closest point (ICP) variants with temporal smoothness constraints, for example generalized ICP with motion regularization adding temporal smoothness terms to penalize sudden transformations between successive frames, and/or color ICP + temporal Filtering, which is configured to combine geometric and photometric (color) constraints with temporal filtering or Kalman-like motion priors.

In certain exemplary implementations, the final 3D representation can use truncated signed distance fields (TSDF) or neural implicit representations, updated incrementally with new fused data. Frame rate directly impacts motion capture, for example, a 30 fps system can be used to accurately reconstruct objects (or people) moving at speeds of no more than 15 Hz in the spatial frequency domain and therefore, the frame rate of the monocular RGB cameras disclosed are customized to the expected density of people and staff on the floor. Resolution limits the smallest reconstructible feature size (for example, when trying to determine inventory scarcity for ERP alerts), with pixel-level details requiring sub-pixel matching precision. Likewise, multi-scale fusion architectures can be used to combine low-resolution high-frame-rate processing for motion estimation with high-resolution low-frame-rate detail refinement, balancing temporal and spatial fidelity.

The system's end-to-end latency (from capture to fused 3D output) is minimized in certain implementations through GPU-accelerated pipelines, particularly when using deep learning components for depth estimation or novel view synthesis. Some implementations face tradeoffs between reconstruction quality and computational load-doubling spatial resolution quadruples memory requirements for depth buffers, while doubling frame rate halves the available processing time per frame. Accordingly, adaptive resolution/framerate control mechanisms are used in certain exemplary implementations to dynamically adjust these parameters based on scene motion complexity, ensuring optimal resource utilization. Cross-modal regularization terms in the fusion optimization (e.g., photometric consistency across views, temporal coherence in point trajectories) can also be used to prevent drift and ensure physically plausible reconstructions under varying lighting and occlusion conditions.

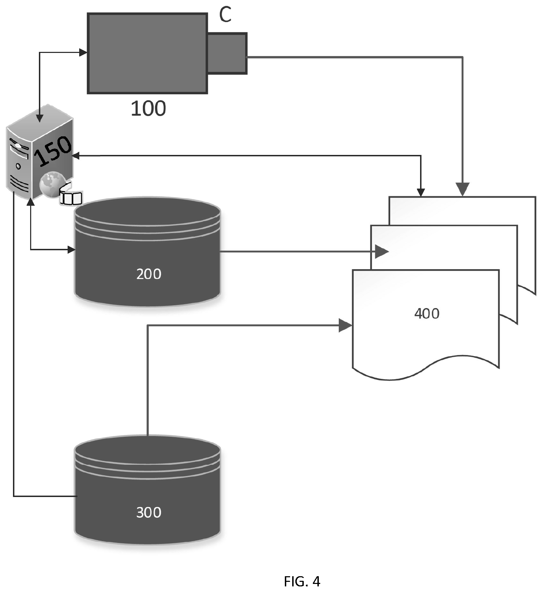

Furthermore, the CPM can additionally employ GPU-accelerated tensor processors for concurrent video stream analysis, deployed as containerized microservices across distributed edge nodes and cloud and/or local servers. Likewise, memory architecture used, combines in-memory databases (see e.g., 200, 300, FIG. 4) for real-time parameter extraction with persistent storage layers retaining historical optimization patterns, and in certain exemplary implementations employing a version-controlled knowledge repository updated through continuous learning (e.g., using convolutional, recurrent, transformational, or similar neural networks).

Input pipelines can employ adaptive bitrate streaming with temporal frame sampling, dynamically adjusting resolution parameters based on detected activity levels. In certain exemplary implementations, the systems disclosed implementing the methods provided, can implement frame-differencing algorithms to trigger high-resolution capture during motion events while maintaining low-power monitoring during idle periods.

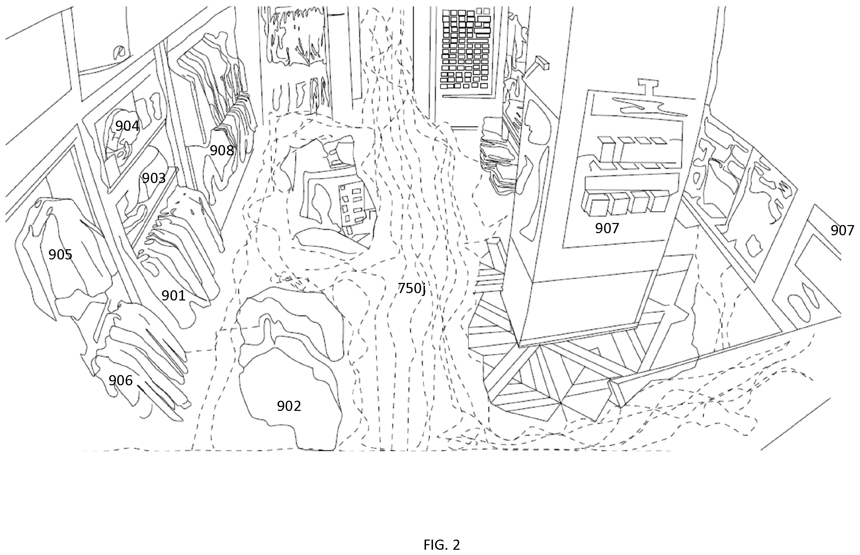

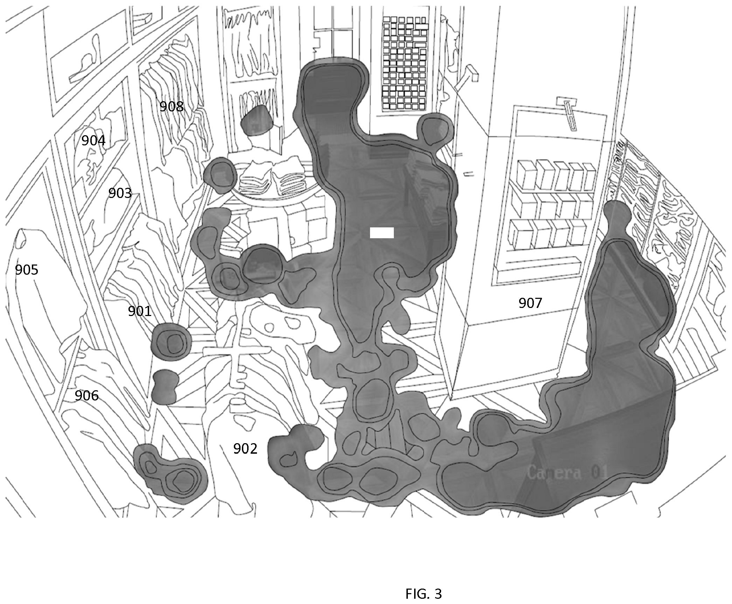

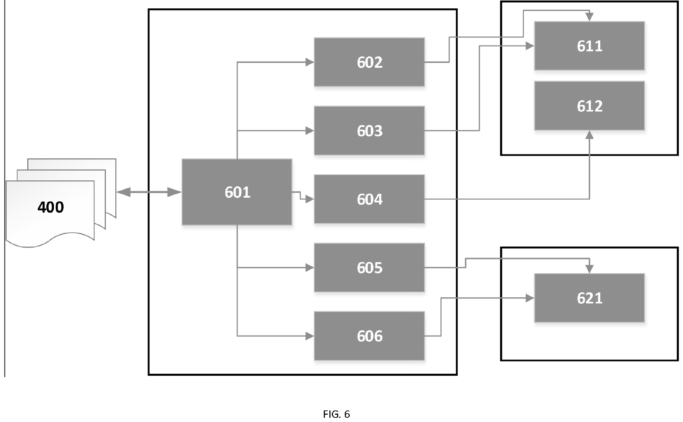

For example, computer vision models trained on retail analytics datasets are used to extract: customer trajectory heatmaps using for example, YOLO object detection, as well as product interaction durations through temporal attention networks (see e.g., FIG. 2), and spatial residence time density metrics (see e.g., FIG. 3), via crowd segmentation algorithms. Supplemental Bluetooth beacon data can be used in other circumstances to cross-correlate with visual observations to calculate device dwell times and path-to-purchase patterns (see e.g., 606, FIG. 6).

Moreover, the system compiles extracted parameters into (e.g., Python-based) optimization scripts implementing genetic algorithms that can balance multiple objectives: minimizing staff costs (see e.g., 612, FIG. 6) while maximizing sales conversion rates. These executable recommendations that can further interface with building management APIs to dynamically adjust lighting/AC schedules, generate restocking alerts via, for example, Zapier integrations, and output floorplan revisions through CAD automation tools.

Accordingly and in an exemplary implementation, provided herein is a networked system, implemented in a commercial BnM space comprising: a communication module; at least one imaging module in electronic communication with the communication module, wherein the imaging module is operable to image at least a portion of the commercial BnM space; a central processing module (CPM), in communication with the at least one imaging module and the communication module, wherein the CPM further comprises at least one processor in communication with a non-transitory memory device storing thereon a processor-readable media with a set of executable instructions, configured when executed by at least one processor to: receive at least one image, or a stream of a plurality of images from the imaging module representing at least the portion of the commercial BnM space; from the at least one image, or the stream of a plurality of images, extract a plurality of parameters; and based on the extracted parameters, generate a customized code operable to provide a user with a set of recommendations configured to optimize a plurality of operational parameters of the commercial BnM space. In certain exemplary implementation the imaging module comprises a plurality of monocular RGB cameras, and the system is adapted and configured to capture a plurality of images, from a plurality of monocular RGB cameras, fusing the multiple 2D images, to a 3D image or a clip, or a stream of images, used for carrying out the analysis disclosed.

Additionally, the networked systems disclosed, can further comprise a "user interface module", which broadly refers to any visual, graphical, tactile, audible, sensory, or other means of providing information to and/or receiving information from a user or other entity. For example, a set of instructions which enable presenting a graphical user interface (GUI) on a display module to a user for displaying and changing and or inputting data associated with a data object in data fields. In an exemplary implementation, the user interface module is capable of displaying any data received from a backend management server (BMS), with which it maintains communication.

In addition, the term 'module', as used herein, means, but is not limited to, a software or hardware component, such as a Field Programmable Gate-Array (FPGA) or Application-Specific Integrated Circuit (ASIC), which performs certain tasks. A module may advantageously be configured to reside on an addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

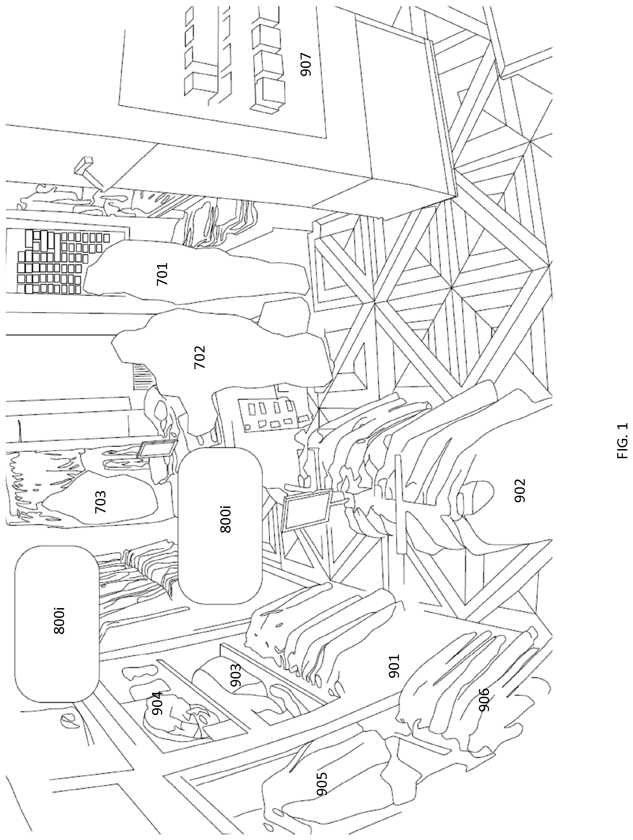

In the context of the systems disclosed, the term "backend management server" or BMS, is intended to refer broadly to a computing device such as an application server (see e.g.,150, FIG. 4) that includes at least some degree of management capability over devices, nodes and assets on the communication network. For example, a network manager deploys a management server to configure, manage, and monitor a portion of the communication network, such as, for example, to determine the entry of the customer into the BnM space location; and transmit the request to the store server (see e.g., FIG. 1).

It is noted that the term "communication module" as used herein a functional unit comprising suitable circuitry, such as hardware and/or software. Generally, the communication modules may be established as individual physical modules of a single server, and/or as individual physical modules of several interconnected servers forming a network, while the term "module" refers to software, hardware, for example, a processor, or a combination thereof that is programmed with instructions for carrying an algorithm or method. The modules described herein may communicate through a wired connection, for example, a hard-wired connection, a local area network, or the modules may communicate wirelessly. Likewise, "communication module" as used herein refers to a device or a component of a device that allows communication-e.g., sending and receiving of commands, triggers, notifications, prompts, acknowledgments, information, messages, forms, and various types of data.

It is noted that the term "imaging module" as used herein means a unit that includes a plurality of built-in image and/or optic sensors and outputs electrical signals, which have been obtained through photoelectric conversion, as an image, while the term "module" refers to software, hardware, for example, a processor, or a combination thereof that is programmed with instructions for carrying an algorithm or method. The modules described herein may communicate through a wired connection, for example, a hard-wired connection, a local area network, or the modules may communicate wirelessly. The imaging module may comprise charge coupled devices (CCDs), a complimentary metal-oxide semiconductor (CMOS) or a combination comprising one or more of the foregoing. If static images are required, the imaging module can comprise a digital frame camera, where the field of view (FOV) can be predetermined by, for example, the camera size and the distance from the subject's face. The cameras used in the imaging modules of the systems and methods disclosed, can be a digital camera. The term "digital camera" refers in an exemplary implementation to a digital still camera, a digital video recorder that can capture a still image of an object and the like. The digital camera can comprise an image capturing unit or module, a capture controlling module, a processing unit (which can be the same or separate from the central processing module). Capturing the image can be done with, for example image capturing means such as a CCD solid image capturing device of the full-frame transfer type, and/or a CMOS-type solid image capturing device, or their combination. For example, the imaging module can comprise one or more monocular RGB digital camera(s), referring to a digital camera having a single lens sensor that captures color (red, green, and blue) information, but it doesn't provide depth information like a stereo camera or an RGB-D camera.

Furthermore, the systems used herein can be computerized systems that further comprise a central processing module (CPM); a display module; and a user interface module. The Display modules, which can include display elements, which may include any type of element which acts as a display. A typical example is a Liquid Crystal Display (LCD). LCD for example, includes a transparent electrode plate arranged on each side of a liquid crystal. There are however, many other forms of displays, for example OLED displays and Bi-stable displays. New display technologies are also being developed constantly. Therefore, the term display should be interpreted widely and should not be associated with a single display technology. Also, the display module may be mounted on a printed circuit board (PCB) of an electronic device, arranged within a protective housing and the display module is protected from damage by a glass or plastic plate arranged over the display element and attached to the housing.

The term "computer-readable medium" as used herein, in addition to having its ordinary meaning, refers to any medium that participates in providing instructions to a processor for execution. Such a medium may take many forms, including but not limited to, non-volatile media and volatile media. Non-volatile media can be, for example, optical or magnetic disks, such as a storage device. Volatile media includes dynamic memory, such as main memory.

Memory device as used in the methods, programs and systems described herein can be any of various types of memory devices or storage devices. The term "memory device" is intended to encompass an installation medium, e.g., a CD-ROM, floppy disks, or tape device; a computer system memory or random access memory such as DRAM, DDR RAM, SRAM, EDO RAM, Rambus RAM, etc.; or a non-volatile memory such as a magnetic media, e.g., a hard drive, optical storage, or ROM, EPROM, FLASH, etc. The memory device may comprise other types of memory as well, or combinations thereof. In addition, the memory medium may be located in a first computer in which the programs are executed (e.g., a training computer), and/or may be located in a second different computer [or micro controller] which connects to the first computer over a network, such as the Internet [remark: they might be even not connected and information will be transferred using USB stick]. In the latter instance, the second computer may further provide program instructions to the first computer for execution. The term "memory device" can also include two or more memory devices which may reside in different locations, e.g., in different computers that are connected over a network.

The BMS 150 and the imaging module, in some cases, can utilize Transmission Control Protocol (TCP). TCP, for instance, utilizes handshakes to establish communication sessions between devices. For example, a first device transmits a synchronize message including a first sequence number to a second device. The second device, in turn, transmits a synchronize-acknowledgement message including a second sequence number as well as a first acknowledgement number that is one greater than the first sequence number. In response, the first device transmits an acknowledgement message including a second acknowledgment number that is one greater than the second sequence number to the second device. The first and second devices, in some examples, are paired once the first device transmits the acknowledgement message. The sequence and acknowledgement numbers are used to initialize counters that track messages and/or bytes of data transmitted between the paired devices.

It should also be noted that the term "database" as used herein, refers generically to any collection of information or data, and is not meant to be limited to any particular way of storing, organizing, or retrieving such data, such as a relational database. Furthermore, the term "database" may refer either to a body of data, a non-relational databases, such as Atlas^{®} MongoDB, a relational database management system (RDBMS), or to both. As used herein, a database may include any collection of data including hierarchical databases, relational databases, flat file databases, object-relational databases, object oriented databases, and any other structured collection of records or data that is stored in a computer system. The above examples are example only, and thus are not intended to limit in any way the definition and/or meaning of the term database. Examples of RDBMS's include, but are not limited to including, Oracle^{®} Database, MySQL, IBM^{®} DB2, Microsoft^{®} SQL Server, Sybase^{®}, and PostgreSQL. However, any database may be used that enables the systems and methods described herein. (Oracle is a registered trademark of Oracle Corporation, Redwood Shores, Calif.; IBM is a registered trademark of International Business Machines Corporation, Armonk, N.Y.; Microsoft is a registered trademark of Microsoft Corporation, Redmond, Wash.; and Sybase is a registered trademark of Sybase, Dublin, Calif.).

In an exemplary implementation, the plurality of parameters extracted from the at least one image, or the stream of the plurality of images are: a customer position within an interior of the commercial brick-and-mortar space, a customer movement, an employee activity, a layout of the interior of the commercial brick-and-mortar space, interactions between customer and employees, or any combination comprising two or more of the foregoing. In other words, the system's computer vision pipeline identifies spatial-temporal patterns through multi-modal sensor fusion, capturing: real-time customer coordinates via, for example, SLAM-based positioning with ±15cm accuracy (see e.g., FIG. 1); movement vectors using e.g., optical flow analysis at sampling rate of between 22 Hz, and 60 Hz, and/or other staff activity classification using for example, ResNet-50 models trained on annotated retail workforce datasets received from the same or sister BnM spaces. Spatial layout mapping (see e.g., 602, FIG. 6) can be done using off-line processor (see e.g., 601, FIG. 6), combine LiDAR point clouds, or just using the digital imaging obtained with the imaging module in certain implementations, with for example, CNN-based semantic segmentation for fixture recognition.

For example, and in yet another exemplary implementation, the plurality of parameters extracted from the at least one image, or the stream of the plurality of images obtained from the one or plurality of imaging modules used in the BnM space, are hand gestures of the customer, which can be identified by the system, and upon classification of the gesture, can be configured to send an alert or an action or der to a selected employee with instructions on the gesture (includes moving gestures (e.g., a hand wave) and static gestures (e.g., a peace (V) sign).

In the context of the disclosure, the term "gesture" and derivatives thereof e.g., "hand gesture", refers to any kind of static or dynamic positioning of any one or more body parts of a human or non-human subject including a static pose and/or an entire movement of one or more body parts within a short period. For example a gesture may be considered as a posture/pose of body parts such as hand(s) posture, lips posture, torso posture, leg(s) posture, facial expression and the like or a combination of at least two of them such as a combination of the posture of the hands and the lips or a combination of the posture of the legs and the torso etc. In another example, a gesture is a movement of the lips or hands or a hand holding object such as smartphone or an article of clothing, or a tool or other merchandise sold in the BnM space or any other body part or a combination of body parts within one or more predefined periods of time (e.g. a few seconds or a fraction of a second such as a few milliseconds).

Accordingly, the process wherein hand gestures are extracted from image streams captured by a plurality of monocular RGB cameras, classified, and mapped to system actions or alerts; can begin with the acquisition of synchronized image streams from each camera. Each camera is temporospatially calibrated and synchronized to determine both intrinsic and extrinsic parameters as disclosed herein, providing accurate spatial alignment and subsequent 3D reconstruction. Temporal synchronization is used to capture frames simultaneously to ensure that gesture dynamics are faithfully represented across views, reducing temporal offsets that can lead to inconsistencies in gesture trajectory reconstruction.

Hand detection and segmentation in each camera view is then used, employing computer vision algorithms, and leveraging deep learning, to segment the hand region from the background. Techniques such as color-based skin detection, edge detection, or convolutional neural networks trained for semantic segmentation can be used. The segmentation masks isolate the hand and fingers, enabling downstream pose estimation and feature extraction. Following segmentation, the system detects anatomical landmarks or keypoints on the hand, such as fingertips, knuckles, and the wrist. In an exemplary implementation, neural networks are used to regress 2D keypoints from each camera view, which are then matched across views using, for example, epipolar geometry constraints derived from the camera temporospatial calibration. With correspondences established, triangulation algorithms can then reconstruct the 3D positions of hand joints and other relevant points in space, thereby resolving any depth ambiguities inherent in 2D monocular RGB data and provides a temporally coherent 3D representation of the hand's pose and movement (in other words, the gesture).

For dynamic gestures, the system is operable tracks the 3D positions of hand keypoints across consecutive frames, with temporal filtering methods such as Kalman filters, optical flow, and/or via DL-based re-identification module, and/or recurrent neural networks (RNNs) used to smooth trajectories and compensate for noise or brief occlusions (shadowing). The resulting temporospatial sequence of 3D hand poses can then be analyzed to classify the gesture. Gesture classification is achieved in certain exemplary implementations, using machine learning models such as support vector machines, hidden Markov models, or deep learning architectures trained on labeled gesture datasets. These models are designed to recognize both the spatial configuration of the hand and the temporal evolution of its movement, enabling robust differentiation between similar gestures. Once a gesture is recognized and classified, the system then maps the detected gesture to a predefined action or alert. This mapping can be implemented simply as a lookup table or rule-based engine, which associates each recognized gesture with a specific system response-such as sending an alert to a designated employee with instructions based on the gesture performed by the customer, as described in the disclosure.

It is noted, that higher resolution improves the accuracy of hand segmentation and keypoint localization, allowing for more precise 3D reconstruction and gesture recognition, especially for subtle finger movements. Likewise, higher frame rates are beneficial to accurately capture fast gestures and avoid motion blur, but can increase computational demands and data bandwidth requirements. Accordingly, and in yet another exemplary implementation, the system balances these factors to achieve real-time performance while maintaining high recognition accuracy.

In an exemplary implementation, the plurality of parameters extracted from the at least one image, or the stream of the plurality of images are: a customer position within an interior of the commercial brick-and-mortar space, a customer movement, an employee activity, a layout of the interior of the commercial brick-and-mortar space, interactions between customer and employees, or any combination comprising two or more of the foregoing. In other words, the system's computer vision pipeline identifies spatial-temporal patterns through multi-modal sensor fusion, capturing: real-time customer coordinates via, for example, multi-camera fusion techniques inspired by Simultaneous Localization and Mapping (SLAM), Structure from Motion (SfM), and multiple-view geometry-based methods as described herein, which are used to refine and combine sensor data into a unified, optimized, and three-dimensional representation of the commercial BnM space. Movement vectors can be extracted using, e.g., optical flow analysis at a sampling rate between 22 Hz and 60 Hz, and/or other staff activity classification using, for example, ResNet-50 models trained on annotated retail workforce datasets received from the same or sister BnM spaces. Spatial layout mapping (see e.g., 602, FIG. 6) can be done using an offline processor (see e.g., 601, FIG. 6), or just using the digital imaging obtained with the imaging module in certain implementations, with for example, CNN-based semantic segmentation for fixture recognition.

The plurality of operational parameters optimized by the system and methods disclosed, can be, for example; customer experience, inventory mix, inventory location, number of employees per time period, stock orders optimization, promotion placement (see e.g., 613, FIG. 6), overall store compliance with store standards, or an operational parameter comprising at least two of the foregoing. In certain exemplary implementations, operational parameters undergo continuous Pareto optimization balancing. For example, customer experience scores derived from dwell time/return frequency ratios, and/or inventory turnover rates calculated through shelf-space proportionality analysis, and/or labor efficiency metrics are generated, incorporating heatmap-weighted staff deployment models (see e.g., 612, FIG. 6). A constraint programming engine can be further used to enforce minimum service level agreements during optimization.

Moreover, the systems disclosed, used to implement the methods provided, further comprise a display module, wherein the set of executable instructions is further configured when executed by the at least one processor to: generate and render heat map illustrating customer movement density within a predetermined portion within the interior of the commercial BnM space, generate and render a map illustrating customer movement within an interior of the commercial BnM space, generate and render an image illustrating interaction of a single customer with an item within an interior of the commercial BnM space, and generate and render an image illustrating stores within an interior of the commercial BnM space Detect and display instances when the store is in an unorganized state based on predefined criteria. Using system-detected anomalies or missing activity data, log and display instances where the store was not opened during scheduled operating hours, Generate and render dwell time analysis to determine how long customers spend in specific areas of the store. Generate and render customer flow predictions to anticipate movement patterns and optimize store layout. Generate and render visual analytics tracking employee interactions with customers and store items. Generate and render product engagement heat maps (see e.g., 603, FIG. 6) to visualize the level of customer interest in specific products based on interaction frequency and duration. It is noted, that the heatmaps and person trajectories described here are global across the entire floor, and not isolated per individual camera feed. This is made possible by the multi-camera data fusion pipeline, which spatially and temporally aligns detections from multiple monocular RGB cameras into a unified store-wide coordinate system. This fusion enables continuous and accurate trajectory reconstruction even as individuals move across non-overlapping camera. It is noted, that when referring to plurality of streams of captured images, the fusion is from multiple cameras, for example, between 2 and 300 cameras, for example, between 2 and 30 cameras.

As indicated, heatmaps can employ kernel density estimation with adaptive bandwidth selection, overlaying geofenced store zones through, for example, WebGL-accelerated rendering, with color gradients representing visitor concentration from blue (low) to red (high) (see e.g., FIG. 3 for grayscale-converted heat map), with temporal playback controls for pattern analysis. Customer trajectories can be reconstructed using for example, Kalman-filtered position data, displayed as animated Bezier curves with timestamp markers. The map interface can implement leaflet.js layers toggleable between raw paths and aggregate flow directions (see e.g., FIG. 2).

Furthermore, attention-based neural networks can be used to trigger image capture at the existing resolution (e.g., between 640x480@10fps and 4K@60fps) during product handling events, generating (timestamped) interaction sequences stored with skeletal pose metadata for later review, while autoencoder architectures are used in another exemplary implementation to convert RGB-D inputs into 2D planograms, highlighting fixture positions (see e.g., 901-907, FIG.s 1-3) against ideal or BnM space policy CAD planograms. Variance detection can be used to trigger reorganization alerts when deviations exceed e.g., 10% threshold.

In addition, multi-task networks can be used to evaluate shelf fill rates simultaneously via e.g., depth imaging, and/or floor obstruction detection through Mask R-CNN, and/or display alignment (with initial directives) using for example, Hough transform analysis and updating compliance scores in real-time on dashboard widgets rendered on the display module. Similarly, computer vision is used in yet another exemplary implementation, to validate store opening through sequential checks: using e.g., entrance barrier position analysis, and/or lighting intensity measurements, and/or staff uniform detection, with any anomalies triggering for example, SMS/email alerts with evidentiary video clips as attachments.

Moreover, the systems disclosed are operable to calculate zone-specific dwell durations using for example, survival analysis models, thereby accounting for adjacent zone transition probabilities, and/or group dynamics through social clustering algorithms, and/or promotional signage visibility factors, with transformer architecture, which can processes historical movement patterns with weather/event data, generating 15-minute increment forecasts rendered for example as particle simulation overlays on the digital twin interface(s).

Also, YOLO models and the like, with HRNet backbones, can be used in certain circumstances to track staff interactions, classifying activities into various (user defined) categories. These can be for example; customer assistance and/or restocking operations, and/or maintenance tasks, with performance metrics that compare observed vs. expected task distributions measured and displayed. Additionally, logarithmic heatmap intensity scales with combined touch frequency/duration metrics are calculated, with embedded attention maps highlighting product aspects (labels, price tags) which receive visual focus during interactions, can be flagged.

In another exemplary implementation, a point-of-sale (POS) module, and an enterprise resource planning (ERP) module are each included with the systems disclosed and claimed, and each is in further communication with the CPM, wherein the set of executable instructions is further configured when executed by the at least one processor to: analyze the effect of the plurality of operational parameters on revenue generated in the POS; based on the revenue generated in the POS, alert the ERP; and automate tasks associated with the ERP. Accordingly, revenue attribution models which employ for example gradient-boosted decision trees can be used for weighing engagement duration pre-purchase, and/or staff proximity during decision points, and/or complementary product visibility. To quantify parameter contributions SHapley Additive exPlanations (SHAP) values can be used, referring to a method, rooted in game theory, used to explain the output of any machine learning model by assigning each feature a "fair" contribution to the final prediction. Additionally, metrics analysis using Apache Kafka pipeline are provided to e.g., SAP^{®} ERP modules, and be configured to trigger for example, dynamic safety stock calculations, and/or shift scheduling adjustments ( e.g.,via Workforce Management APIs), and/or promotion effectiveness dashboards.

Moreover, RPA bots used in certain circumstances, are operable to execute validated recommendations through Jira ticket generation for restocking needs, and/or lights-out PO creation via EDI integrations, and/or digital signage updates through BrightSign CMS APIs. Other tools are also contemplated.

In yet another exemplary implementation, the set of executable instructions is further configured when executed by the at least one processor to: using the at least one imaging module, track a journey of a first customer throughout the interior of the commercial BnM space; analyze the journey of the first customer for: entry, browsing behavior, interaction with at least one item within the interior of the commercial BnM space, exit, or a combination of interactions comprising one or more of the foregoing; and display a visual representation of the first customer's journey. In other words, employing YOLO object detection combined with tracking algorithms (e.g., DeepSORT, BotSORT, ByteTRACK and the like) the system can maintain persistent customer identifiers across camera feeds (see e.g., 100 FIG. 4), while implementing privacy-preserving techniques through on-device facial blurring before storage. Meanwhile behavior classification can employ a three-tier LSTM architecture processing whereby dwell time thresholds (≥8s triggers browsing flag), with hand-object interaction detection via MediaPipe Holistic, and/or exit confirmation through, for example RFID gate integration. A weighted scoring system can then be used to assign interaction significance values using attention mechanisms from e.g., Transformer architectures. Then, the UI renders the 3D path reconstructions using e.g., Three.js WebGL, overlaying heatmap gradients indicating duration-weighted points. Interactive timeline scrubbers enable playback with synchronized product display panels showing viewed SKUs with anonymized trajectories exported as SVG paths for CAD integration (and later optimization).

Using the analyzed journey of the first customer, the set of executable instructions is further configured when executed by the at least one processor to generate demographic segmentation data, for example, using Multi-task EfficientNet-B4 models, which estimate simultaneously, for example age brackets through ordinal regression, and/or gender probabilities via sigmoid outputs, and/or style preferences using e.g., ResNet-50 trained on fashion MNIST and the like. Cluster analysis can be used to group customers using e.g., t-SNE reduced embeddings and the like, of journey patterns and purchase histories from POS integration.

Moreover, the set of executable instructions is further configured when executed by the at least one processor to: using the at least one imaging module, track a journey of a second customer throughout the interior of the commercial BnM space; analyze the journey of the first customer for: entry, browsing behavior, interaction with at least one item within the interior of the commercial BnM space, exit, or a combination of interactions comprising one or more of the foregoing; and display a visual representation of the second customer's journey. Then using the analyzed journey of the second customer, the set of executable instructions is further configured when executed by the at least one processor to generate demographic segmentation data. This can be done, using for example, ensemble models, which combine journey-derived features with census data through XGBoost survival analysis. Additionally, fairness-aware layer can be used in certain examples, to remove protected attribute biases using adversarial debiasing with Wasserstein GAN architecture. Threshold F1-score Segmentation accuracy of, for example, over 87%, can be achievable when measured against ground truth loyalty card data.

The set of executable instructions used by the CPM to implement the methods implementable in the systems disclosed, is further configured when executed by the at least one processor to: aggregate the demographic segmentation data from the first and second customer; generate a model operable to predict high-interest zones within the interior of the commercial BnM space; and provide targeted product placements within the interior of the commercial BnM space. Specifically and in an exemplary implementation, a Hadoop-based data lake consolidates demographic features with product metadata using e.g., Apache Parquet columnar storage or the like. Differential privacy noise (e.g., Laplace mechanism, Δf=0.3) protects aggregated datasets while maintaining utility for pattern mining. In addition, the system can train gradient-boosted survival forests predicting dwell probabilities of (user-defined) 5-30 minutes across store zones. Likewise, SHAP values can be used to quantify feature importance, while Bayesian optimization tunes hyperparameters against conversion rate objectives. Model drift detection should trigger retraining when KS statistic exceeds 0.15, or another user defined threshold. Similarly, reinforcement learning agent (e.g., PPO algorithm) can optimize product arrangements through digital twin simulations. A reward function can be used to balance predicted engagement scores, and/or inventory turnover rates, and/or cross-selling probabilities from market basket analysis. Furthermore, automated planogram updates can be deployed via REST APIs to electronic shelf label systems.

A pseudo code resulting in the display of the first an/or second customer, and the product placement can be, for example:

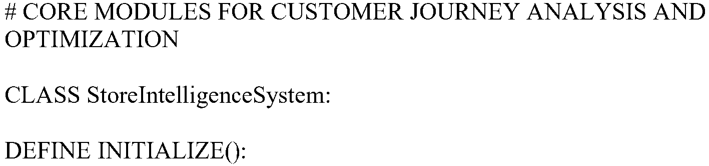

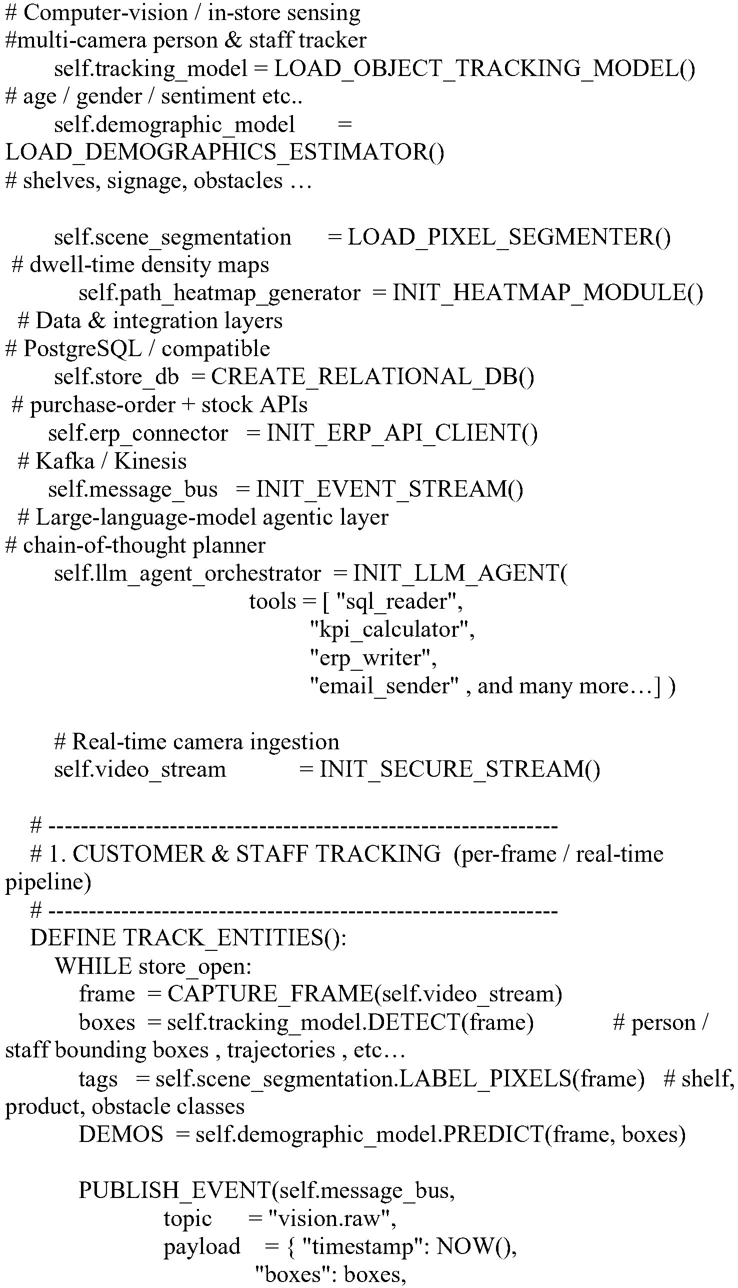

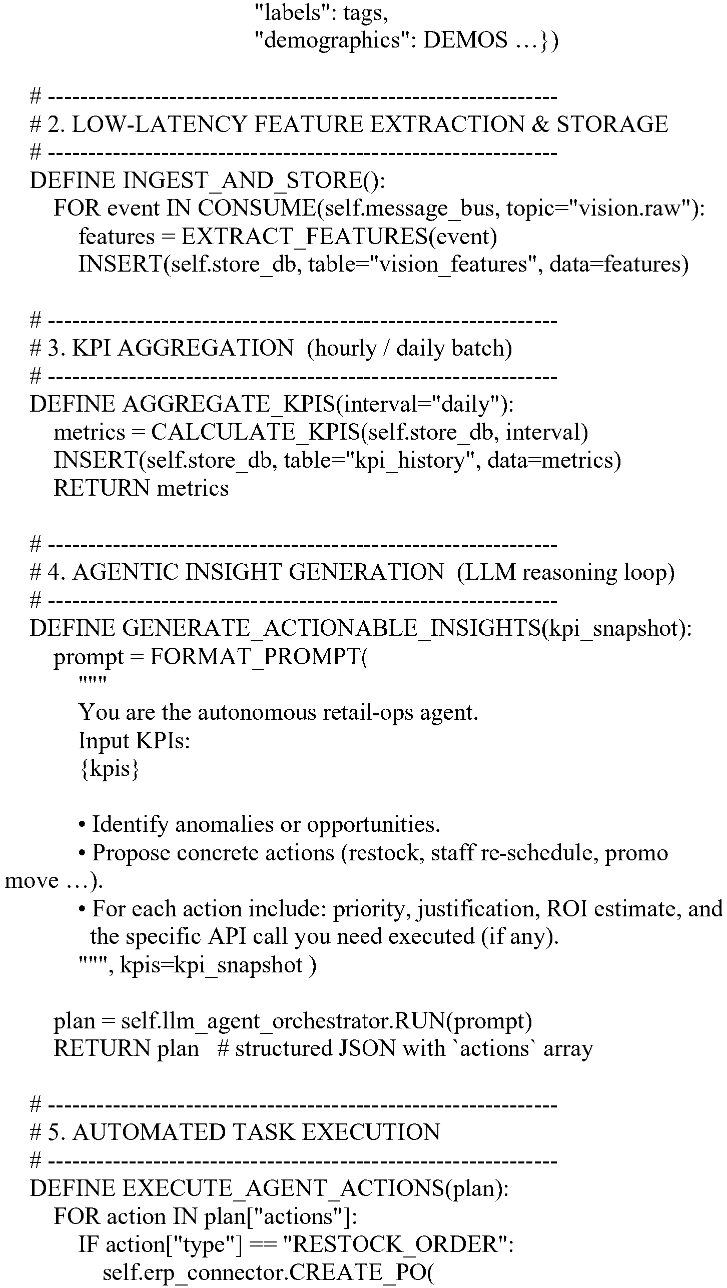

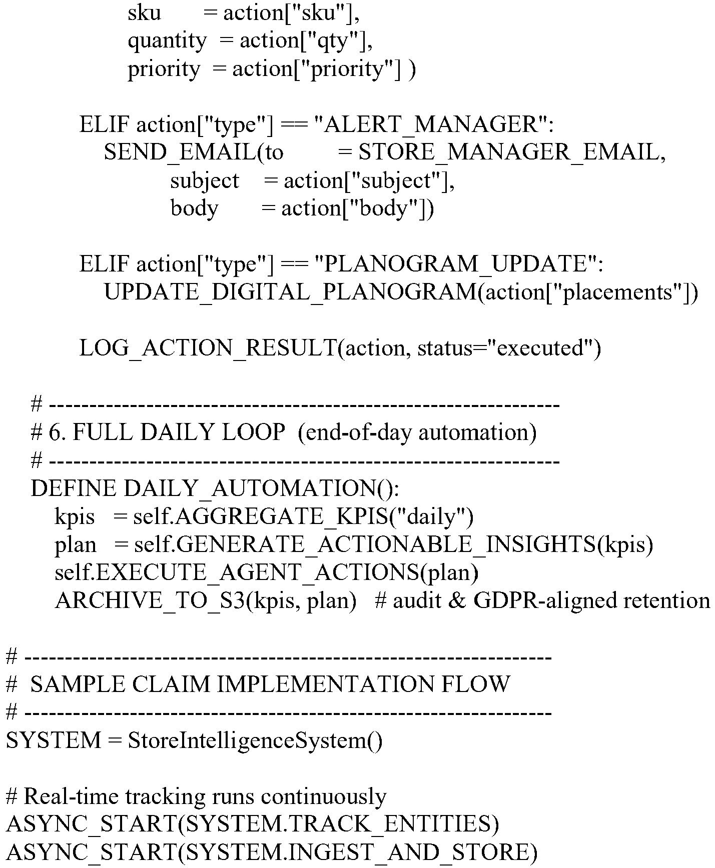

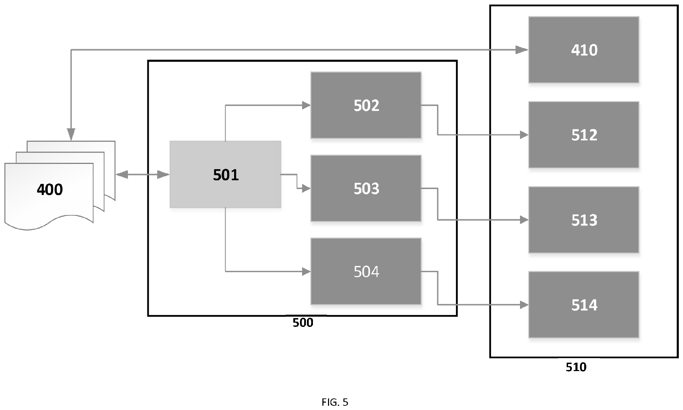

Additionally, the set of executable instructions is further configured when executed by the at least one processor, to automatically generate an employee task assignment, for example, by implementing constraint satisfaction problem solver that generates task assignments through multi-objective optimization. These can be to provide assistance to a specific customer or group of customers (see e.g., 512, FIG. 5), suggest alternative products (see e.g., 513, FIG. 5), or interact with a group of customers (see e.g., 514, FIG. 5).

Input parameters can include real-time customer density maps from imaging module, mmWave sensor, or LIDAR sensor, and/or pending restocking alerts from inventory APIs, and/or status reports of maintenance requirements from IoT device distributed in the BnM space. Tasks can be encoded as JSON objects with priority scores calculated e.g., using Q-learning algorithms, which can then be distributed to employee devices via MQTT protocol with SHA-256 encrypted payloads.

To reiterate, the employee task assignment is in another exemplary implementation, based on: real-time conditions (see e.g., 501, real time processor, FIG. 5), customer needs within the interior of the commercial BnM space, realign store's standards and conditions, or a combination of parameters comprising one or more of the foregoing.

In certain exemplary implementations, the employee task assignment is further prioritized to increase the likelihood of a successful engagement based on: demographics segmentation data, prior interactions of the first and/or second customer, journey history of the first and/or second customer, or a combination comprising one or more of the foregoing. This can be done, using for example, a bipartite graph matching algorithm that pairs employees with customers using for example, demographic compatibility scores from cosine similarity of embedding vectors, and/or interaction success probabilities from survival analysis of historical engagement data (from the same or sister store), and/or proximity weighting using e.g., data captured by the camera(s), and/or Bluetooth beacon or NFC signal strength when implemented. The system is operable to prioritize high-value customer segments identified through RFM (Recency, Frequency, Monetary) analysis of POS integration data. Additionally, or alternatively, the employee task assignment is further prioritized to increase the likelihood of a successful engagement based on: using the client's (store's) existing online recommendation system combined with a rough prediction of what product the customer is holding, (using visual, and stores planogram), and possibly will be likely to purchase to provide a more personalized recommendation.

In yet another exemplary implementation, the set of executable instructions is further configured when executed by the at least one processor to: generate a real-time notification to the user about issues and/or actions that needs to be addressed (see e.g., 501 FIG. 5 for real time processor); and deliver the notification to the user. These notifications can be achieved using for example an event-driven architecture, which triggers alerts when computer vision detects e.g., abandoned shopping carts (establishing static duration > x seconds), and/or facial recognition that identifies VIP customers (using e.g., pre-registered profiles), and/or inventory sensors and imaging modules, which show critical stock levels (less than threshold % age capacity). Notifications can include actionable scripts with estimated resolution times calculated through Monte Carlo simulations.

The multi-channel distributor routes alerts can be based on urgency levels, with for example, high-priority SMS blasts carried out via, for example, Twilio API, Zapier API or the like, and/or in-app push notifications with acknowledgement buttons for restocking requests, and/or email digests with embedded Power BI dashboards for compliance issues, and/or audiovisual alerts. Delivery confirmation can be verified through blockchain-based audit trails, or other similar employee-independent mechanisms.

It is noted, that the set of executable instructions is configured when executed by the at least one processor to generate the customized code operable to provide the user with the set of recommendations configured to optimize the plurality of operational parameters of the commercial BnM space by an Artificial Intelligence and/or Machine Learning subsystem (see e.g., 400 FIG. 4) in communication with the CPM 150 that was trained using historical information previously received from the at least one imaging module in the commercial BnM space, and/or in another commercial BnM space. For example, the subsystem can employ federated learning across store locations, training 3D convolutional neural networks on anonymized customer trajectory videos as disclosed herein. In one exemplary implementation, model architecture can combine, for example, ResNet-50 backbone for spatial feature extraction; temporal shift modules for sequence modeling; and attention layers weighting historical performance data. Hyperparameter tuning, which uses Bayesian optimization with Thompson sampling, can achieve 92% accuracy in layout optimization (see e.g., 611, FIG. 6) predictions across a plurality of BnM spaces.

In addition, the generative artificial intelligence module can be coupled to the system, utilizing for example large language models, which together with an operable Application Programming Interface (API), can be configured to provide the user (via the user interface 1000) with recommendations (see e.g., 410, FIG. 4) based on the data stored in the databases (see e.g., 200 store CRM database, and BMS database 300 FIG. 4).

In an exemplary implementation, the set of executable instructions is further configured when executed by the at least one processor to integrate data from external sources including weather data, local events, and social media trends to correlate with customer behavior patterns within the commercial brick-and-mortar space. For example, external datasets can be absorbed via, for example, RESTful APIs into an Apache Spark streaming pipeline, fusing weather data from, e.g., NOAA forecasts parsed using ISO-SHACL validation, correlating precipitation/temperature with dwell times via Spearman's rank analysis. Local Events can be monitored tapping into Ticketmaster/Eventbrite APIs mapped to store geofences using Haversine distance calculations (<5km radius), while social trends monitored via, for example Twitter Firehose processed through BERTopic modeling to detect BnM-relevant product mentions. Then graph neural network (GNN) can be used to map these features to in-store behavior patterns for individuals or groups (see e.g., 504 FIG. 5), updating product recommendations and/or placement through federated learning across (sister or similar) stores.

Likewise, the plurality of parameters extracted from the at least one image, or the stream of the plurality of images includes facial expressions of customers to determine emotional responses to products, displays, or store layout. RGB cameras having e.g., frame rate as low as 5fps, can be used with the systems disclosed, capturing micro-expression sequences processed through a cascaded neural pipeline such as, for example: OpenFace 2.0 or the like, which extracts 68 facial landmarks, feeding into a fine-tuned ResNet-50 model trained on the AffectNet dataset (8 emotional classes). Temporal smoothing can be carried out via, for example, Hidden Markov Models or the like, that filter transient expressions, while attention mechanisms weight prolonged emotional responses (specified at > x seconds duration) to specific product displays. Privacy safeguards, when implemented, can include on-device processing with AWS Nitro Enclaves and differential privacy (e.g., ε=1.5) for aggregated analytics. Emotional valence scores (range -1 to +1) can be correlated with purchase probabilities through logistic regression models updated periodically as per user definition.

In another exemplary implementation, the Artificial Intelligence/Machine Learning subsystem (see e.g., 400 FIG. 4) implements a neural network trained to recognize specific customer gestures and body language indicating interest (see e.g., 403 FIG. 5), confusion 502, or dissatisfaction. This can be achieved using, for example, a multi-modal transformer architecture that processes skeletal keypoints (e.g., MediaPipe Holistic outputs) and optical flow vectors to classify predefined number of gestures. A neural network can combine 3D ResNeXt-101 spatial features (or the like) with temporal convolutional layers, trained on historical and temporal annotated retail interaction videos. Real-time inference on e.g., NVIDIA T4 GPUs (or the like, e.g., NVIDIA A10 or NVIDIA RTX A6000) can be used to detect confusion patterns (e.g., repeated head shakes x>times·s⁻¹) and interest signals (e.g., prolonged forward leans of more than certain predetermined degrees). User defined Gesture-confidence thresholds (e.g., p≥0.85) can be assessed to trigger contextual staff alerts through e.g., Twilio Flex APIs, while adversarial training can be used to minimize cultural bias in body language interpretation.

Additionally, the set of executable instructions is further configured when executed by the at least one processor to generate dynamic pricing recommendations based on real-time analysis of customer engagement with specific products. For example, a Soft Actor-Critic reinforcement learning model is used to adjust prices periodically based on computer vision-derived, user defined engagement metrics, such as, for example; touch duration (≥ x seconds), and/or comparative product examinations (>x item comparisons/visit), and/or facial expression valence scores. A reward function can be used to optimize for margin-weighted conversion rates, constrained by inventory levels from ERP module integrations and competitor pricing scraped via e.g., BrightData proxies and the like. Prices render on Electronic Shelf Labels ESLs, when available can be carried out using E Ink Carta displays, with rollback guards configured to prevent a number of user defined daily price decreases and SEC-compliant audit trails can then be stored in a Hyperledger.

In yet another exemplary implementation, the set of executable instructions is further configured when executed by the at least one processor to: identify correlations between specific product placements and customer purchasing behavior (see e.g., 605, FIG. 6); generate A/B testing scenarios for alternative product placements; and automatically implement the most effective product placement strategy based on predefined success metrics. The latter can be achieved using for example causal impact analysis employing Double Machine Learning (DoubleML) with instrumental variables derived from camera angles and shelf visibility indices. Bayesian structural time series or the like, can be used to isolate placement effects from confounding factors, while Granger causality tests (with user defined 'p probability thresholds) can be used to validate purchase correlations.

Likewise, SHAP values can be used to quantify feature importance across predetermined number of placement dimensions, generating heatmap overlays on the UI dashboards updated at predetermined, user-defined intervals. In addition, multi-armed bandit framework can be used to allocate and instruct on traffic through, for example, Thompson sampling, testing a plurality of placement variants simultaneously. Furthermore, using digital twin simulations in a platform that enables real-time 3D simulation (e.g., NVIDIA Omniverse, Blender, Unity, Unreal Engine, or Maya) can be used to accelerate testing cycles, using historical traffic patterns to generate synthetic customer flows. Post implementation Computer vision checks can be carried out to verify placement accuracy using for example, ArUco marker detection, with performance feedback loops used to retrain models weekly through e.g., Amazon SageMaker pipelines and the like (e.g., Dataiku, DataRobot Enterprise AI Suite, Databricks Data Intelligence Platform, Google's Vertex AI, and open-source options like MLflow, or Seldon Core) incorporating conversion lift data from POS integrations and inventory turnover rates from Oracle Retail MICROS and the like (e.g., Shopify POS, Square POS, Clover Flex, Dynamics 365 Commerce, Revel Systems POS, or NCR VOYIX POS).

In an exemplary implementation, the real-time notification to the user about issues and/or actions that needs to be addressed further includes a prioritized action list based on potential revenue impact of each identified issue. This can be achieved using for example, a random forest regressor to estimate potential revenue impact scores (0-100 scale) for detected issues, weighing factors such as, for example; historical conversion rates of affected products in the BnM space, or a similar space, customer lifetime value analysis from loyalty program integrations, and/or real-time foot traffic density data. High-priority alerts (with score larger than user-defined threshold, e.g., 75) will then trigger SMS/email cascades via PagerDuty API or similar (e.g., xMatters, OpsGenie, AlertOps, Squadcast, BigPanda, Splunk On-Call, or Better Stack), while lower-priority items configured to queue in Jira Service Management or similar (e.g., ServiceNow, Zendesk, Freshservice, ManageEngine ServiceDesk Plus, SysAid, or SolarWinds Service Desk). Using the system action lists can be dynamically reordered based on live POS data feeds, with SHAP values explaining feature contributions to predicted revenue loss. Additionally, escalation protocols can be further initiated for unresolved high-impact alerts exceeding user-defined time thresholds e.g., 5-30 minutes.

In certain circumstances, it may be important for the set of executable instructions to further be configured when executed by the at least one processor to generate periodic compliance reports comparing actual store financial, temporal, environmental and/or operational conditions against corporate and/or BnM space-specific standards, policies and regulations. In other words, Computer vision pipelines (referring to the data input streams from the at least one camera), are used to perform daily audits using for example object detection with YOLO or similar (e.g., RTMDet) to verify compliance with a user-defined number of predefined standards, for example, proper signage placement (at a user-defined tolerance of ± cm form set point), safety protocol adherence (e.g., mat placement near entrances, wet floor signage and the like), ADA accessibility requirements and the like. Discrepancies are the logged with timestamped evidentiary images hashed to Hyperledger Fabric blockchain or the like (e.g., Ethereum [especially if connected to smart contracts], R3 Corda, Microsoft Azure Blockchain, or Kaleido). Reports can be generated periodically via, for example, JasperReports templates and the like (e.g., BIRT, DotNet Report, Crystal Reports or ReportMill), highlighting persistent violations through exponentially, system-defined weighted moving averages. Automated submissions to corporate compliance portals can take place through vehicles like MuleSoft integrations with SAML 2.0 authentication and the like (e.g., Boomi, TIBCO, Informatica, and SnapLogic).

To further optimize operational parameters of the BnM space, the set of executable instructions is further configured when executed by the at least one processor to perform comparative analysis between multiple commercial brick-and-mortar spaces within the same, or competitive enterprise(s) to identify best practices and optimization opportunities. Accordingly and in another exemplary implementation this analysis can be carried out using Federated learning aggregates with anonymized features obtained from multiple stores into a shared Snowflake data vault or similar (e.g., Amazon Redshift, Google BigQuery, or Azure Synapse Analytics). Dimensionality reduction can be carried out via UMAP embeddings to enable comparison of layout effectiveness across demographic clusters. Performance gaps can be identified through Pareto analysis of key metrics (e.g., conversion rates per sq.ft, staff efficiency ratios end the like - see e.g., 604, FIG. 6). Best practice recommendations can established via, for example clustering of high-performing locations using HDBSCAN and the like (e.g., K-Means with Elbow or Silhouette Method for Optimal K Selection, Gaussian Mixture Models (GMMs), DBSCAN - Density-Based Spatial Clustering of Applications with Noise, or Spectral Clustering), validated through causal impact testing using for example Microsoft DoWhy library or the like (e.g., EconML, causalnex, or judoscale). Automated knowledge sharing can occur through for example, Salesforce Chatter integrations end the like.

In certain implementations, the customized code includes executable instructions for implementing automated inventory management based on visual detection of low-stock and/or misplaced items. A pseudo-code implementing automated inventory management based on visual detection of low-stock and/or misplaced items can be for example:

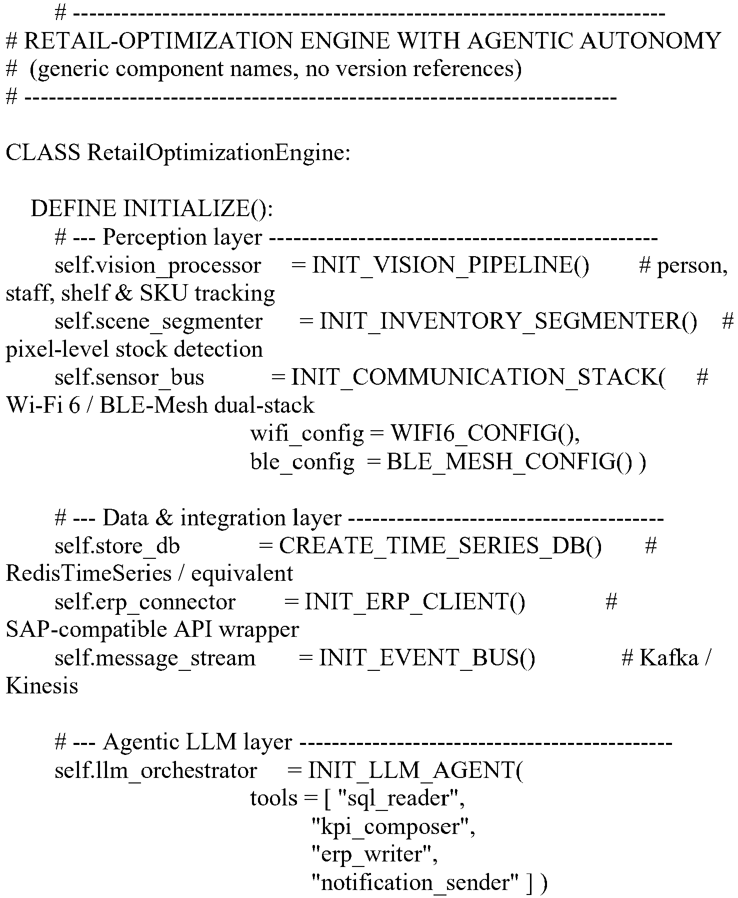

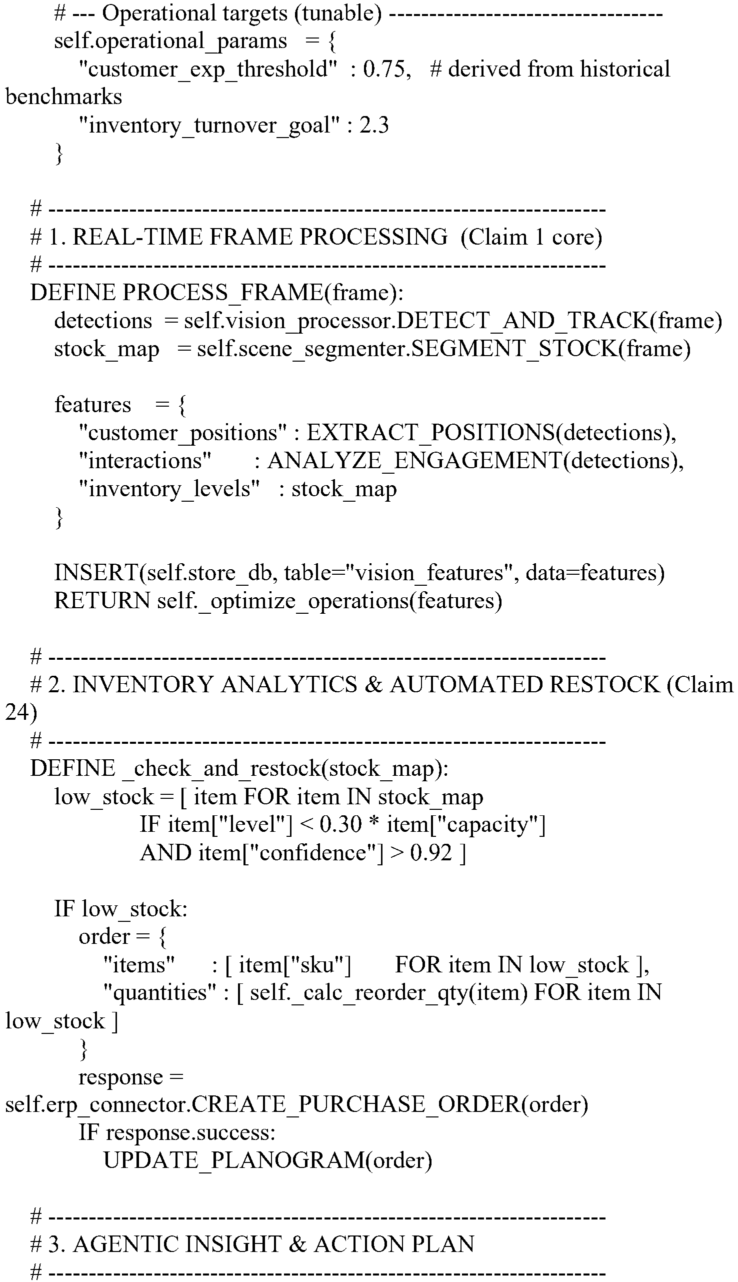

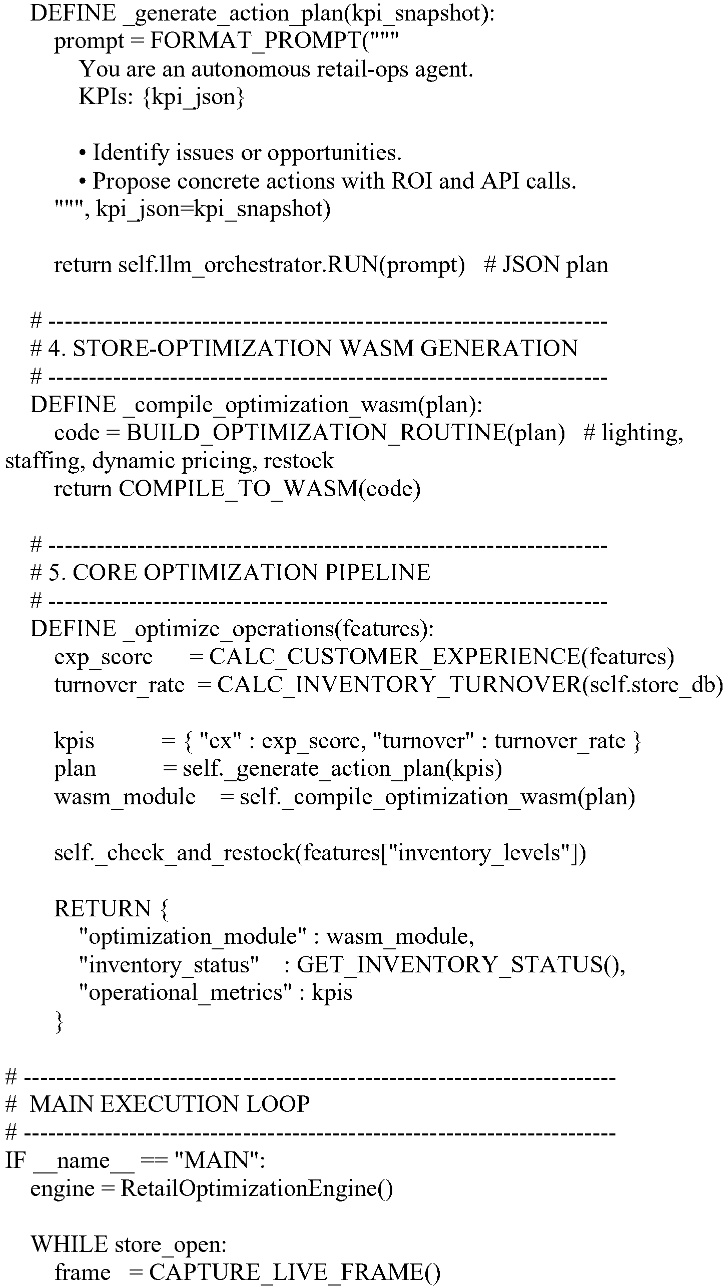

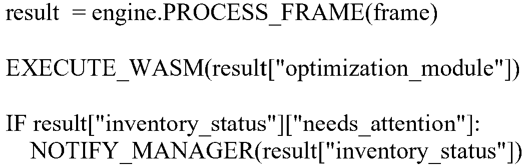

In yet another exemplary implementation, the set of executable instructions is further configured when executed by the at least one processor to generate and render conversion funnel visualizations showing the progression of customers from entry to purchase or exit. In other words, customer journeys (individuals or groups) are mapped to, for example, Markov chain states (Entry → Browsing → Consideration → Purchase/Exit) with transition probabilities calculated periodically (store-specific as learned by the ML). D3.js or the like (e.g., Funnel Graph JS, chartjs-chart-funnel, Syncfusion JavaScript Charts, Frappe, Highcharts, AnyChart, ZingChart, Recharts, Toucan, Google Chart, or Chartist.js) can be used to render funnel stages as interactive (e.g., Sankey) diagrams, and be annotated with, for example, dropout rates and contributing factors (e.g., % exit probability increase when POS queue times > x minutes). Survival analysis models (e.g., Cox proportional hazards, Royston-Parmar family of models, Aalen additive hazard model, Weibull Model, Exponential Model, Accelerated Failure Time (AFT) model, Random Survival Forests (RSF), Bayesian survival analysis, Nelson-Aalen estimator, Kaplan-Meier estimator, Life table estimator, or Marginal approaches (WLW)) can be used to identify critical abandonment points, while A/B testing modules would be used to suggest layout modifications to improve stage transitions.

In addition, and in yet another exemplary implementation, the set of executable instructions is further configured when executed by the at least one processor to detect and analyze customer-to-customer interactions to identify social shopping patterns and optimize store layout accordingly. This can be done using the at least one camera whereby pose estimation networks (e.g., OpenPose) detect group formation through interpersonal distance (e.g., less than 1.2m for >30s, or other user-defined criteria), and/or shared gaze vectors toward products, and /or conversational turn-taking patterns from audio beamforming. Furthermore, social networking graphs can be constructed using e.g., NetworkX and the like (Graph-tool, igraph, SNAP, NetworKit, CDLib, Graphviz, PyViz, Dash-Cytoscape, Graphinate, Karateclub, LittleBallOfFur, Metaknowledge, NNGT, nxviz, GraSPy, or Graspologic), identifying influencer nodes through eigenvector centrality scoring. Layout optimizations can then be simulated via, for example, AnyLogic digital twin, testing cluster-friendly configurations that increase group conversion probabilities by 1predetermined percentage in validation trials. Likewise, dynamic signage adjustments can be deployed through BrightSign CMS and the like (e.g., Wallboard, OptiSigns, NoviSign, Screenly, Navori, Xibo Signage, ScreenCloud, Signagelive, Spectrio, Yodeck, Hype Loop, viewneo, Kitcast, Skykit, Carousel Digital Signage, SignStix, XOGO Decision Signage, ComQi EnGage, UCView Digital Signage, Mango Signs, or Signbox) when group density thresholds as defined by the system exceed location-specific baselines.

In the context of the disclosure, the term "funnel stages" refer to distinct phases in a customer's journey within the commercial brick-and-mortar space that are analyzed to measure progression and identify points of abandonment. These stages typically comprise entry into the store, browsing through various sections, interacting with products or displays, considering a purchase decision, completing a transaction at the point-of-sale, or exiting the store without making a purchase. The system tracks and visualizes these stages using data extracted from imaging modules and other sensors to optimize store layout, operational parameters, and customer engagement strategies.

Additionally, the computer program used to enable the methods and systems for generating the customized set of executable instructions, can be a set of instructions that can be used, directly or indirectly, in a computer. The systems and methods described herein can be implemented using programming languages such as PYTHON, JAVA^{™}, C++, C, C#, JavaScript^{™}, PHP, XML, HTML, Solidity, Rust, etc., or a combination of programming languages, including compiled or interpreted languages, and can be deployed in any form, including as a stand-alone program or as a module, component, subroutine, or other unit suitable for use in a computing environment, including a virtual machine and/or virtual container. The software can include, but is not limited to, firmware, resident software, microcode, etc. Protocols such as SOAP/HTTP may be used in implementing interfaces between programming modules. The components and functionality described herein may be implemented on any desktop operating system executing in a virtualized or non- virtualized environment, using any programming language suitable for software development, including, but not limited to, different versions of Microsoft Windows^{™}, Apple^{™} Mac^{™}, lOS^{™}, Unix^{™}/X-Windows^{™}, Linux^{™}, etc. The system could be implemented using a web application framework, such as Ruby on Rails.

The system can be in communication with a computerized data storage system. The data storage system can include a non-relational or relational data store, such as a MySQL^{™} or other relational database. Other physical and logical database types could be used. The said local data storage system may be used as an in-memory cache, as well as a persistent file store. It may be used to store a fast-access view of decrypted smart contract data. In addition to storing the shared data profiles in blockchain smart contracts, other data may be stored in a local database server, such as Microsoft SQL Server^{™}, Oracle^{™}, IBM DB2^{™}, SQLITE^{™}, or any other database software, relational or otherwise. The data store (e.g., 151, 152, 1530, 1531) may store the information identifying syntactical tags and any information required to operate on syntactical tags. In some exemplary implementations, the processing system may use object-oriented programming and may store data in objects. In these exemplary implementations, the processing system may use an object-relational mapper (ORM) to store the data objects in a relational database. The systems and methods described herein can be implemented using any number of physical data models. In one example exemplary implementation, an RDBMS can be used. In those exemplary implementations, tables in the RDBMS can include columns that represent coordinates. In the case of environment tracking systems, data representing user events, virtual elements, etc. can be stored in tables in the RDBMS. The tables can have pre-defined relationships between them. The tables can also have adjuncts associated with the coordinates. Suitable processors for the execution of a program of instructions include, but are not limited to, general and special purpose microprocessors, and the sole processor or one of multiple processors or cores, of any kind of computer. A processor may receive and store instructions and data from a computerized data storage device such as a read-only memory, a random access memory, both, or any combination of the data storage devices described herein. A processor may include any processing circuitry or control circuitry operative to control the operations and performance of an electronic device.

Further, a central processing module (CPM) may be associated with each system component, and may be operably coupled to the various modules and components with appropriate circuitry. may also be used herein, the term(s) "operably coupled to", "coupled to", and/or "coupling" includes direct coupling between items and/or indirect coupling between items via an intervening item (e.g., an item includes, but is not limited to, a component, an element, a circuit, an engine, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item.

As may also be used herein, the terms "central processing module" (CPM), "module", "processing circuit", and/or "processing unit" may be a single processing device or a plurality of processing devices. Such a processing device may be a microprocessor, microcontroller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module, module, processing circuit, and/or processing unit may have an associated memory and/or an integrated memory element, which may be a single memory device, a plurality of memory devices, and/or embedded circuitry of the processing module, module, processing circuit, and/or processing unit. Such a memory device may be a read-only memory, random access memory, volatile memory, non-volatile memory, static memory, dynamic memory, flash memory, cache memory, and/or any device that stores digital information. Note that if the processing module, module, processing circuit, and/or processing unit includes more than one processing device, the processing devices may be centrally located (e.g., directly coupled together via a wired and/or wireless bus structure) or may be distributed (e.g., cloud computing via indirect coupling via a local area network and/or a wide area network). Further note that if the processing module, module, processing circuit, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processing module, module, processing circuit, and/or processing unit executes, hard coded and/or operational instructions corresponding to at least some of the steps and/or functions illustrated in one or more of the figures. Such a memory device or memory element can be included in an article of manufacture.

Other databases that can be accessed (the data retrieved and the way to access these databases) can be, for example, API Agents,
The terms "a", "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the network(s) includes one or more network). Reference throughout the specification to "one exemplary implementation", "another exemplary implementation", "an exemplary implementation", and so forth, means that a particular element (e.g., feature, structure, and/or characteristic) described in connection with the exemplary implementation is included in at least one exemplary implementation described herein, and may or may not be present in other exemplary implementations. In addition, it is to be understood that the described elements may be combined in any suitable manner in the various exemplary implementations.

The term "system" shall also be taken to include any collection of systems or subsystems that individually or jointly execute a set, or multiple sets, of instructions to perform one or more functions. Also, the term "system" refers to a logical assembly arrangement of multiple devices, and is not restricted to an arrangement wherein all of the component devices are in the same housing.

Accordingly and in an exemplary implementation, provided herein is a networked system, implemented in a commercial brick-and-mortar space comprising: a communication module; at least one imaging module in electronic communication with the communication module, wherein the imaging module is operable to image at least a portion of the commercial brick-and-mortar space; a user interface; a central processing module (CPM), in communication with the at least one imaging module, the user interface, and the communication module, wherein the CPM further comprises at least one processor in communication with a non-transitory memory device storing thereon a processor-readable media with a set of executable instructions, configured when executed by at least one processor to: receive at least one image, or a stream of a plurality of images from the imaging module representing at least the portion of the commercial brick-and-mortar space; from the at least one image, or the stream of a plurality of images, extract a plurality of parameters; and based on the extracted parameters, generate a customized code operable to provide a user with a set of recommendations configured to optimize a plurality of operational parameters of the commercial brick-and-mortar space, wherein (i) the plurality of parameters extracted from the at least one image, or the stream of the plurality of images are: a customer position within an interior of the commercial brick-and-mortar space, a customer movement, an employee activity, a layout of the interior of the commercial brick-and-mortar space, interactions between customer and employees, or any combination comprising two or more of the foregoing, (ii) the plurality of operational parameters optimized by the system are: customer experience, inventory mix, inventory location, number of employees per time period, stock orders optimization, promotion placement, overall store compliance with store standards, or an operational parameter comprising at least two of the foregoing, (iii) further comprising a display module wherein the set of executable instructions is further configured when executed by the at least one processor to: generate and render heat map illustrating customer movement density within a predetermined portion within the interior of the commercial brick-and-mortar space; generate and render a map illustrating customer movement within an interior of the commercial brick-and-mortar space; generate and render an image illustrating interaction of a single customer with an item within an interior of the commercial brick-and-mortar space; and generate and render an image illustrating stores within an interior of the commercial brick-and-mortar space, detect and display instances when the store is in an unorganized state based on predefined criteria, using system-detected anomalies or missing activity data, log and display instances where the store was not opened during scheduled operating hours; generate and render dwell time analysis to determine how long customers spend in specific areas of the store; generate and render customer flow predictions to anticipate movement patterns and optimize store layout; generate and render visual analytics tracking employee interactions with customers and store items; generate and render product engagement heat maps to visualize the level of customer interest in specific products based on interaction frequency and duration, wherein (iv) a point-of-sale (POS) module, and an enterprise resource planning (ERP) module are included with the system and is in further communication with the CPM and wherein the set of executable instructions is further configured when executed by the at least one processor to: analyze the effect of the plurality of operational parameters on revenue generated in the POS; based on the revenue generated in the POS, alert the ERP; and automate tasks associated with the ERP, wherein (v) the set of executable instructions is further configured when executed by the at least one processor to: using the at least one imaging module, track a journey of a first customer throughout the interior of the commercial brick-and-mortar space; analyze the journey of the first customer for: entry, browsing behavior, interaction with at least one item within the interior of the commercial brick-and-mortar space, exit, or a combination of interactions comprising one or more of the foregoing; and display a visual representation of the first customer's journey, (vi) the customer trajectories are constructed globally using fused streams from a plurality of monocular cameras positioned across the BnM space, wherein (vii) the set of executable instructions is further configured when executed by the at least one processor to: using the at least one imaging module, track a journey of a second customer throughout the interior of the commercial brick-and-mortar space; analyze the journey of the first customer for: entry, browsing behavior, interaction with at least one item within the interior of the commercial brick-and-mortar space, exit, or a combination of interactions comprising one or more of the foregoing; and display a visual representation of the second customer's journey (viii) using the analyzed journey of the second customer, the set of executable instructions is further configured when executed by the at least one processor to generate demographic segmentation data, wherein (ix) the set of executable instructions is further configured when executed by the at least one processor to: aggregate the demographic segmentation data from the first and second customer; generate a model operable to predict high-interest zones within the interior of the commercial brick-and-mortar space; and provide targeted product placements within the interior of the commercial brick-and-mortar space, (x) the set of executable instructions is further configured when executed by the at least one processor to automatically generate an employee task assignment, wherein (xi) the employee task assignment is based on: real-time conditions, customer needs within the interior of the commercial brick-and-mortar space, realign store's standards and conditions, or a combination of parameters comprising one or more of the foregoing (xii) the employee task assignment is further prioritized to increase the likelihood of a successful engagement based on: demographics segmentation data, prior interactions of the first and/or second customer, journey history of the first and/or second customer, or a combination comprising one or more of the foregoing, wherein (xiii) the set of executable instructions is further configured when executed by the at least one processor to: generate a real-time notification to the user about issues and/or actions that needs to be addressed; and deliver the notification to the user, as well as (xiv) to generate the customized code operable to provide the user with the set of actionable recommendations configured to optimize the plurality of operational parameters of the commercial brick-and-mortar space by an Artificial Intelligence and/or Machine Learning subsystem in communication with the CPM that was trained using historical information previously received from the at least one imaging module in the commercial brick-and-mortar space, and/or in another commercial brick-and-mortar space, wherein (xv) the set of executable instructions is further configured when executed by the at least one processor to integrate data from external sources including weather data, local events, and social media trends to correlate with customer behavior patterns within the commercial brick-and-mortar space, wherein (xvi) the plurality of parameters extracted from the at least one image, or the stream of the plurality of images obtained from a plurality of monocular cameras (e.g., monocular RGB cameras) includes facial expressions of customers to determine emotional responses to products, displays, or store layout, (xvii) the Artificial Intelligence/Machine Learning subsystem implements a neural network trained to recognize specific customer gestures and body language indicating interest, confusion, or dissatisfaction, wherein (xviii) the set of executable instructions is further configured when executed by the at least one processor to generate dynamic pricing recommendations based on real-time analysis of customer engagement with specific products, wherein (xix) the set of executable instructions is further configured when executed by the at least one processor to: identify correlations between specific product placements and customer purchasing behavior; generate A/B testing scenarios for alternative product placements; and automatically implement the most effective product placement strategy based on predefined success metrics, (xx) the notification includes a prioritized action list based on potential revenue impact of each identified issue, wherein (xxi) the set of executable instructions is further configured when executed by the at least one processor to generate periodic compliance reports comparing actual store conditions against corporate standards and regulations, (xxii) the set of executable instructions is further configured when executed by the at least one processor to perform comparative analysis between multiple commercial brick-and-mortar spaces within the same enterprise to identify best practices and optimization opportunities, wherein (xxiii) the customized code includes executable instructions for implementing automated inventory management based on visual detection of low-stock or misplaced items, wherein (xxiv) the set of executable instructions is further configured when executed by the at least one processor to generate and render conversion funnel visualizations showing the progression of customers from entry to purchase or exit, wherein (xxv) the set of executable instructions is further configured when executed by the at least one processor to detect and analyze customer-to-customer interactions to identify social shopping patterns and optimize store layout accordingly, and wherein (xxvi) the extracted parameters being derived via spatial and temporal fusion of the plurality of monocular cameras streams.

In another exemplary implementation, provided herein is a computer-implemented method for optimizing a brick-and-mortar space operations through sensor-driven artificial intelligence, the method comprising: capturing, via at least one imaging module positioned in the brick-and-mortar space, a sequence of digital images depicting customer interactions with physical products and store fixtures; processing said digital images through a GPU-accelerated tensor processor to detect spatial-temporal patterns of customer movement and product engagement; receiving Bluetooth beacon proximity signals from mobile devices within said retail environment, said signals encoding real-time customer location data with sub-meter accuracy; extracting, via a trained convolutional neural network, quantified operational parameters from fused image and proximity data streams, said parameters including dwell time gradients, path collision frequencies, and inventory touch rates; generating executable control instructions that dynamically adjust at least two interdependent store systems selected from: digital signage content, HVAC operational profiles, or robotic inventory restocking schedules; transmitting said control instructions through an IEEE 802.11ax wireless interface to effect real-time physical environment modifications; iteratively refining said neural network through federated learning updates derived from anonymized customer interaction patterns across multiple retail locations.

In yet another exemplary implementation, provided herein is an article of manufacture comprising a non-transitory computer-readable storage medium having a set of executable instructions embedded thereon, which when executed by at least one processor, cause the at least one processor to: receive at least one image, or a stream of a plurality of images from an imaging module representing at least a portion of a commercial brick-and-mortar space; from the at least one image, or the stream of a plurality of images, extract a plurality of parameters; and based on the extracted parameters, generate a customized code operable to provide a user with a set of recommendations configured to optimize a plurality of operational parameters of the commercial brick-and-mortar space.

While particular exemplary implementations have been described, alternatives, modifications, variations, improvements, and substantial equivalents that are or may be presently unforeseen may arise to applicants or others skilled in the art.

## Claims

1. A networked system, implemented in a commercial brick-and-mortar space comprising:
a) a communication module;
b) at least one imaging module in electronic communication with the communication module, wherein the imaging module is operable to image at least a portion of the commercial brick-and-mortar space;
c) a user interface;
d) a central processing module (CPM), in communication with the at least one imaging module, the user interface, and the communication module, wherein the CPM further comprises at least one processor in communication with a non-transitory memory device storing thereon a processor-readable media with a set of executable instructions, configured when executed by at least one processor to:
i. receive at least one image, or a stream of a plurality of images from the imaging module representing at least the portion of the commercial brick-and-mortar space;
ii. from the at least one image, or the stream of a plurality of images, extract a plurality of parameters; and
iii. based on the extracted parameters, generate a customized a set of recommendations configured to optimize a plurality of operational parameters of the commercial brick-and-mortar space.

2. The system of claim 1, wherein the plurality of parameters extracted from the at least one image, or the stream of the plurality of images are: a customer position within an interior of the commercial brick-and-mortar space, a customer movement, a customer gesture, an employee activity, a layout of the interior of the commercial brick-and-mortar space, interactions between customer and employees, or any combination comprising two or more of the foregoing.

3. The system of claim 1, wherein the plurality of operational parameters optimized by the system are: customer experience, inventory mix, inventory location, number of employees per time period, stock orders optimization, promotion placement, overall store compliance with store standards, or an operational parameter comprising at least two of the foregoing.

4. The system of claim 2, further comprising a display module wherein the set of executable instructions is further configured when executed by the at least one processor to:
a) generate and render heat map illustrating customer movement density within a predetermined portion within the interior of the commercial brick-and-mortar space;
b) generate and render a map illustrating customer movement within an interior of the commercial brick-and-mortar space;
c) generate and render an image illustrating interaction of a single customer with an item within an interior of the commercial brick-and-mortar space; and
d) generate and render an image illustrating stores within an interior of the commercial brick-and-mortar space
e) Detect and display instances when the store is in an unorganized state based on predefined criteria.
f) Using system-detected anomalies or missing activity data, log and display instances where the store was not opened during scheduled operating hours,.
g) Generate and render dwell time analysis to determine how long customers spend in specific areas of the store.
h) Generate and render customer flow predictions to anticipate movement patterns and optimize store layout.
i) Generate and render visual analytics tracking employee interactions with customers and store items.
j) Generate and render product engagement heat maps to visualize the level of customer interest in specific products based on interaction frequency and duration.

5. The system of claim 4, wherein a point-of-sale (POS) module, and an enterprise resource planning (ERP) module are included with the system and is in further communication with the CPM and wherein the set of executable instructions is further configured when executed by the at least one processor to:
a) analyze the effect of the plurality of operational parameters on revenue generated in the POS;
b) based on the revenue generated in the POS, alert the ERP; and
c) automate tasks associated with the ERP.

6. The system of claim 4, wherein the set of executable instructions is further configured when executed by the at least one processor to:
a) using the at least one imaging module, track a journey of a first customer throughout the interior of the commercial brick-and-mortar space;
b) analyze the journey of the first customer for: entry, browsing behavior, interaction with at least one item within the interior of the commercial brick-and-mortar space, exit, or a combination of interactions comprising one or more of the foregoing; and
c) display a visual representation of the first customer's journey.

7. The system of claim 6, wherein customer trajectories are constructed globally using fused streams from a plurality of monocular cameras positioned across the BnM space.

8. The system of claim 7, wherein the set of executable instructions is further configured when executed by the at least one processor to:
a) using the at least one imaging module, track a journey of a second customer throughout the interior of the commercial brick-and-mortar space;
b) analyze the journey of the first customer for: entry, browsing behavior, interaction with at least one item within the interior of the commercial brick-and-mortar space, exit, or a combination of interactions comprising one or more of the foregoing; and
c) display a visual representation of the second customer's journey.

9. The system of claim 8, wherein, using the analyzed journey of the second customer, the set of executable instructions is further configured when executed by the at least one processor to generate demographic segmentation data.

10. The system of claim 9, wherein the set of executable instructions is further configured when executed by the at least one processor to:
a) aggregate the demographic segmentation data from the first and second customer;
b) generate a model operable to predict high-interest zones within the interior of the commercial brick-and-mortar space; and
c) provide targeted product placements within the interior of the commercial brick-and-mortar space.

11. The system of claim 10, wherein the set of executable instructions is further configured when executed by the at least one processor to automatically generate an employee task assignment.

12. The system of claim 11, wherein the employee task assignment is based on: real-time conditions, customer needs within the interior of the commercial brick-and-mortar space, realign store's standards and conditions, or a combination of parameters comprising one or more of the foregoing.

13. The system of claim 12, wherein the employee task assignment is further prioritized to increase the likelihood of a successful engagement based on: demographics segmentation data, prior interactions of the first and/or second customer, journey history of the first and/or second customer, or a combination comprising one or more of the foregoing.

14. The system of claim 13, wherein the set of executable instructions is further configured when executed by the at least one processor to:
a) generate a real-time notification to the user about issues and/or actions that needs to be addressed; and
b) deliver the notification to the user.

15. The system of any one of the preceding claims, wherein the set of executable instructions is configured when executed by the at least one processor to generate the customized code operable to provide the user with the set of recommendations configured to optimize the plurality of operational parameters of the commercial brick-and-mortar space by an Artificial Intelligence and/or Machine Learning subsystem in communication with the CPM that was trained using historical information previously received from the at least one imaging module in the commercial brick-and-mortar space, and/or in another commercial brick-and-mortar space.

16. The system of claim 1, wherein the set of executable instructions is further configured when executed by the at least one processor to integrate data from external sources including weather data, local events, and social media trends to correlate with customer behavior patterns within the commercial brick-and-mortar space.

17. The system of claim 1, wherein the plurality of parameters extracted from the at least one image, or the stream of the plurality of images includes facial expressions of customers to determine emotional responses to products, displays, or store layout.

18. The system of claim 15, wherein the Artificial Intelligence/Machine Learning subsystem implements a neural network trained to recognize specific customer gestures and body language indicating interest, confusion, or dissatisfaction.

19. The system of claim 3, wherein the set of executable instructions is further configured when executed by the at least one processor to generate dynamic pricing recommendations based on real-time analysis of customer engagement with specific products.

20. The system of claim 10, wherein the set of executable instructions is further configured when executed by the at least one processor to:
a) identify correlations between specific product placements and customer purchasing behavior;
b) generate A/B testing scenarios for alternative product placements; and
c) automatically implement the most effective product placement strategy based on predefined success metrics.

21. The system of claim 14, wherein the notification includes a prioritized action list based on potential revenue impact of each identified issue.

22. The system of claim 1, wherein the set of executable instructions is further configured when executed by the at least one processor to generate periodic compliance reports comparing actual store conditions against corporate standards and regulations.

23. The system of claim 10, wherein the set of executable instructions is further configured when executed by the at least one processor to perform comparative analysis between multiple commercial brick-and-mortar spaces within the same enterprise to identify best practices and optimization opportunities.

24. The system of claim 1, wherein the customized code includes executable instructions for implementing automated inventory management based on visual detection of low-stock or misplaced items.

25. The system of claim 4, wherein the set of executable instructions is further configured when executed by the at least one processor to generate and render conversion funnel visualizations showing the progression of customers from entry to purchase or exit.

26. The system of claim 1, wherein the set of executable instructions is further configured when executed by the at least one processor to detect and analyze customer-to-customer interactions to identify social shopping patterns and optimize store layout accordingly.

27. A computer-implemented method for optimizing a brick-and-mortar space operations through sensor-driven artificial intelligence, the method comprising:
a) capturing, via at least one imaging module positioned in the brick-and-mortar space, a sequence of digital images depicting customer interactions with physical products and store fixtures;
b) processing said digital images through a GPU-accelerated tensor processor to detect spatial-temporal patterns of customer movement and product engagement;
c) receiving Bluetooth beacon proximity signals from mobile devices within said retail environment, said signals encoding real-time customer location data with sub-meter accuracy;
d) extracting, via a trained convolutional neural network, quantified operational parameters from fused image and proximity data streams, said parameters including dwell time gradients, path collision frequencies, and inventory touch rates;
e) generating executable control instructions that dynamically adjust at least two interdependent store systems selected from: digital signage content, HVAC operational profiles, or robotic inventory restocking schedules;
f) transmitting said control instructions through an IEEE 802.11ax wireless interface to effect real-time physical environment modifications;
g) iteratively refining said neural network through federated learning updates derived from anonymized customer interaction patterns across multiple retail locations.

28. An article of manufacture comprising a non-transitory computer-readable storage medium having a set of executable instructions embedded thereon, which when executed by at least one processor, cause the at least one processor to:
a) receive at least one image, or a stream of a plurality of images from an imaging module representing at least a portion of a commercial brick-and-mortar space;
b) from the at least one image, or the stream of a plurality of images, extract a plurality of parameters; and
c) based on the extracted parameters, generate a customized code operable to provide a user with a set of recommendations configured to optimize a plurality of operational parameters of the commercial brick-and-mortar space.

29. The system of claim 7, wherein the extracted parameters being derived via spatial and temporal fusion of the plurality of monocular cameras streams.
